# EUROPÄISCHE PATENTSCHRIFT

(11) **EP 1 263 620 B1**
(45) Veröffentlichungstag und Bekanntmachung des Hinweises auf die Patenterteilung: **11.06.2008**
(21) Anmeldenummer: 01915074.7
(22) Anmeldetag: 05.03.2001
(51) Int. Cl.: B60J 3/02, B60R 11/02

(54) **EINGABEVORRICHTUNG AN EINER SONNENBLENDE**
INPUT DEVICE LOCATED ON A SUN-VISOR
DISPOSITIF POUR ENTRER DES DONNEES SUR UN PARE-SOLEIL

(30) Priorität: 03.03.2000 DE 10010435
(43) Veröffentlichungstag der Anmeldung: 11.12.2002
(73) Patentinhaber: ROBERT BOSCH GMBH, 70442 Stuttgart (DE)
(72) Erfinder: WEINBERGER, Markus, 85057 Ingolstadt (DE)
(86) Internationale Anmeldenummer: PCT/DE2001/000818
(87) Internationale Veröffentlichungsnummer: WO 2001/064465

(56) Entgegenhaltungen:
- WO-A-01/03981
- WO-A-98/57216
- DE-A- 3 316 818
- DE-U- 29 709 454
- FR-A- 2 754 217
- JP-A- 10 297 380

## Beschreibung

### Stand der Technik

Die Erfindung geht aus von einer Eingabevorrichtung nach der Gattung des Hauptanspruchs. Es sind schon Eingabevorrichtungen z.B. für Navigationssysteme in einem Kraftfahrzeug bekannt, bei denen die Eingabe von Buchstaben über möglichst wenige Bedienelemente erfolgt und einzelne Buchstaben von einem Benutzer aus einer Auswahl von Buchstaben ausgewählt werden. Ferner können mobile Computer (sogenannte Laptops) im Kraftfahrzeug verwendet werden. Solche mobilen Computer weisen eine Tastatur auf, die im allgemeinen der Tastatur eines herkömmlichen Computers entspricht, durch die auf einfache Weise Texte eingegeben werden können, z.B. für ein auf dem mobilen Computer laufendes Routenbestimmungsprogramm. Ein Benutzer muß jedoch den mobilen Computer in dem Fahrzeug mitführen, ihn für die Bedienung fixieren und bei Verlassen des Fahrzeugs den mobilen Computer wieder entnehmen oder ihn gegen Blicke von Außen in das Fahrzeuginnere sichern, um nicht einen Diebstahlsanreiz zu schaffen.

Aus der JP 10-297380 A (Abstract) ist ein Fahrzeugnavigationssystem bekannt, das über eine Tastatur gesteuert wird. Die Tastatur kann im Fahrzeug in einer Öffnung einer Türe eingebracht sein, aber auch hinter eine Klappe einer Sonnenblende eingeschoben werden. Zur Betätigung wird die Tastatur aus der Öffnung, also beispielsweise aus der Sonnenblende, herausgenommen.

### Vorteile der Erfindung.

Die erfindungsgemäße Eingabevorrichtung mit den Merkmalen des Hauptanspruchs hat demgegenüber den Vorteil, dass durch die Anordnung der Eingabevorrichtung eine vollwertige Tastatur für eine in dem Fahrzeug angeordnete Recheneinheit zur Verfügung steht, ohne dass eine solche Eingabevorrichtung von einem Benutzer mit einer externen Recheneinheit in das Fahrzeug eingebracht werden muß oder dass Raum für eine solche Eingabevorrichtung in der Mittelkonsole des Fahrzeugs oder im Bereich eines Fahrers bzw. eines Beifahrers vorgesehen werden muß.

Besonders vorteilhaft ist es, die Sonnenblende entnehmbar in einer Halterung anzuordnen, damit ein Benutzer sie für eine Eingabe in eine geeignete Position bringen kann. Wird die Eingabevorrichtung nicht benötigt, wird sie von dem Benutzer wieder in die Halterung gesteckt und ist dort bis zur nächsten Benutzung geschützt und griffbereit aufgehoben.

Durch die in den Unteransprüchen aufgeführten Maßnahmen, sind vorteilhafte Weiterbildungen und Verbesserungen der im Hauptanspruch angegebenen Eingabevorrichtung möglich.

Es ist weiterhin vorteilhaft, dass die Eingabevorrichtung über eine von dem Bordnetz des Fahrzeugs unabhängige Spannungsversorgung verfügt, da hierdurch keine ständige Leitungsverbindung zwischen der Eingabevorrichtung und einem Bordnetz des Fahrzeugs bestehen muß. Insbesondere ist es vorteilhaft, einen wiederaufladbaren Stromspeicher z.B. einen Akkumulator, an der Eingabevorrichtung anzuordnen, da hierdurch ein Auswechseln von Batterien vermieden wird.

Ferner ist es vorteilhaft, einen Datenaustausch zwischen der Recheneinheit und der Eingabevorrichtung drahtlos vorzusehen, um Leitungen zwischen der Eingabevorrichtung und der Recheneinheit vermeiden zu können.

Es ist ferner vorteilhaft, an der Eingabevorrichtung zumindest Tasten für die Buchstaben des Alphabets, vorzugsweise in einer Anordnung wie auf einer Schreibmaschine oder PC-Tastatur, und/oder einen Ziffernblock mit Zahlen von 0 bis 9 anzuordnen. Der Benutzer ist die Anordnung dieser Tasten gewohnt und kann sich daher schnell auf die im Fahrzeug angeordnete Tastatur umstellen, ohne sich an eine neue Tastaturanordnung gewöhnen zu müssen.

Weiterhin ist es vorteilhaft, die Tasten als Folientasten auszuführen, da sich Folientasten nur sehr wenig über eine Oberfläche erheben, so dass bei einem Zurückklappen der Sonnenblende gegen das Fahrzeugdach nicht versehentlich Tasten gedrückt werden. Außerdem sind Folientasten leicht reinigbar und unempfindlich bei Nässe, z. B. bei der Verwendung in Fahrzeugen, deren Dach geöffnet werden kann.

Weiterhin ist es vorteilhaft, dass über die Eingabevorrichtung Daten in eine Fahrerinformationsvorrichtung und/oder in eine Navigationsvorrichtung und/oder über eine drahtlose Schnittstelle in eine außerhalb des Fahrzeugs angeordnete Dienstezentrale eingebbar sind. Hierdurch ist es möglich, dass die Eingabevorrichtung z. B. für einen Kontakt zum Internet dient, z.B. zur Auswahl von Webseiten oder zum Versenden von elektronischen Nachrichten.

Außerdem ist es vorteilhaft, dass die Eingabevorrichtung durch die Sonnenblende verdeckbar ist, da die Tastatur in einem verdeckten Zustand von außen nicht einsehbar ist und hierdurch ein zusätzlicher Anreiz für einen Dieb, das Auto aufzubrechen, vermieden wird.

Weiterhin ist vorteilhaft, daß die Sonnenblende aus einer Halterung entnehmbar ist, da hierdurch die Sonnenblende auch als eine Tastatur im Fahrzeug verwendet werden kann, die entweder über eine Funkschnittstelle oder über ein Kabel mit der Rechenvorrichtung verbunden ist. Insbesondere ein in der Sonnenblende angeordneter Akkumulator ermöglicht einen Betrieb der Sonnenblende, ohne daß die Sonnenblende mit einer Fahrzeugbatterie verbunden sein muß. Hierdurch kann die Sonnenblende sowohl bequem für einen Beifahrer, aber auch von Fahrgästen an anderen Positionen des Fahrzeugs benutzt werden. Hierbei kann die Sonnenblende eine herkömmliche Tastatur eines Computers ersetzen, da die Rückseite der Sonnenblende genug Platz für die Anordnung einer Computertastatur bietet. Durch die beliebige Anordnung im Fahrzeug kann ein Benutzer die Sonnenblende dabei so halten, daß eine bequeme Eingabe in die an der Sonnenblende angeordnete Eingabevorrichtung möglich ist.

### Zeichnung

Ausführungsbeispiele der Erfindung sind in der Zeichnung dargestellt und in der nachfolgenden Beschreibung näher erläutert. Es zeigen Figur 1 eine Ansicht auf den Bereich vor einem Fahrer und Beifahrer in einem Fahrzeug, Figur 2 eine Schaltung der Eingabevorrichtung in der Sonnenblende zu einer Stromversorgung und zu der Recheneinheit, Figuren 3a und 3b eine Halterung für die Sonnenblende, Figuren 4a und 4b ein Ausführungsbeispiel für eine aus der Sonnenblende entnehmbare Eingabevorrichtung und Figur 5 ein Ausführungsbeispiel für einen Anschluß der Eingabevorrichtung in der Sonnenblende über Verbindungsdrähte.

### Beschreibung des Ausführungsbeispiels

Die Eingabevorrichtung kann in Fahrzeugen aller Art, so z.B. in Flugzeugen, in Schiffen, in schienengebundenen Fahrzeugen und in Kraftfahrzeugen verwendet werden. In dem Ausführungsbeispiel wird die Verwendung in einem Kraftfahrzeug beschrieben. Für die Beschreibung wurde ein links gesteuertes Kraftfahrzeug ausgewählt.

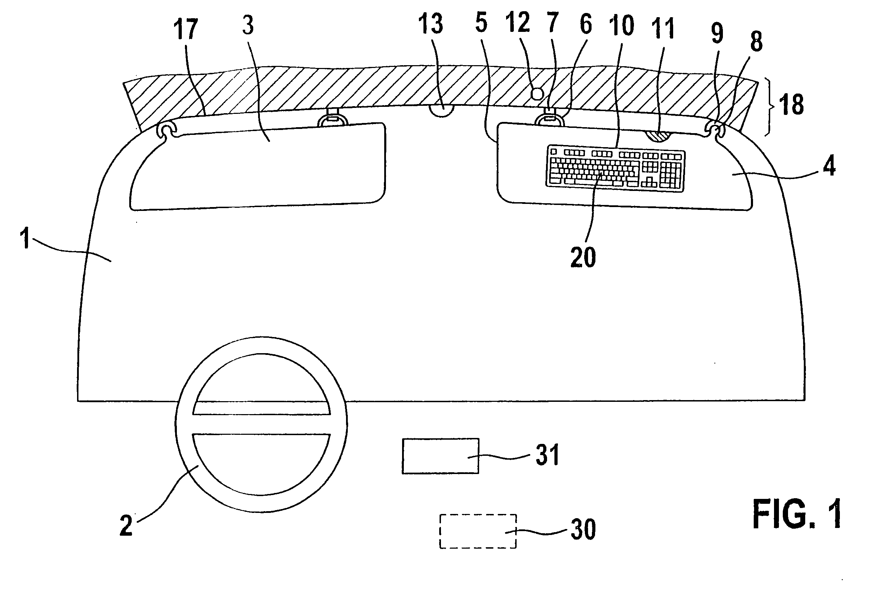

In der Figur 1 ist der Bereich vor einem Fahrer und einem Beifahrer in einem Kraftfahrzeug aus der Sicht des Fahrers bzw. des Beifahrers dargestellt. Hinter einem Lenkrad 2, vor dem sich die in der Figur nicht eingezeichnete Sitzposition eines Fahrers des Kraftfahrzeugs befindet, ist eine Windschutzscheibe 1 angeordnet, in deren oberem Bereich eine Sonnenblende 3 vor dem Fahrer angeordnet ist. In der Ansicht der Figur 1 befindet sich rechts neben der Position des Fahrers eine Position eines Beifahrers. Eine Sonnenblende 5 ist vor dem Beifahrer in einem oberen Bereich der Windschutzscheibe 1 rechts neben der Sonnenblende 3, die sich vor dem Fahrer befindet, angeordnet. In der Sonnenblende 5 vor dem Beifahrer, ist eine Eingabevorrichtung 10 mit einem aus einer Vielzahl von Tasten bestehenden Tastenfeld 20 angeordnet. Die Eingabevorrichtung 10 ist dabei auf einer der Windschutzscheibe 1 abweisenden Seite 4 der Sonnenblende 5 angeordnet. An einer oberen Kante 17 der Windschutzscheibe 1 schließt sich ein Fahrzeugdach 18 an, an dem eine erste Halterung 7 und eine zweite Halterung 9 angeordnet ist. In die erste Halterung 7 und die zweite Halterung 9 greifen ein erstes Halteelement 6 und ein zweites Halteelement 8 der Sonnenblende 5 ein. Ferner ist in der Nähe der oberen Kante 17 der Windschutzscheibe 1 ein Bedienelement 12 angeordnet, nach dessen Bedienung die Sonnenblende 5 aus der ersten Halterung 7 und der zweiten Halterung 9 lösbar ist. Ein Bereich 11 der Sonnenblende 5 dient als Durchlaß für eine drahtlose Datenübertragung zu einem Empfänger 13, der vorzugsweise in einem mittleren Bereich der oberen Kante 17 der Windschutzscheibe 1 an dem an die Windschutzscheibe 1 anschließenden Fahrzeugdach 18 angeordnet ist. Im Bereich einer Mittelkonsole des Fahrzeugs ist eine Anzeigeeinheit 31 angeordnet, die als Ausgabeeinheit einer Recheneinheit 30 dient, die an einem für den Fahrer und den Beifahrer nicht sichtbaren Stelle des Fahrzeugs, vorzugsweise im Inneren des Dashbords, angeordnet ist. Die Anzeigeeinheit 31 ist vorzugsweise eine Flüssigkristallanzeige und kann anstelle der Position in der Mittelkonsole auch direkt vor dem Fahrer, z. B. neben einer Geschwindigkeitsanzeige, oder direkt neben dem Beifahrer angeordnet sein. Ferner sind auch mehrere Anzeigen an verschiedenen Positionen im Fahrzeug möglich, die je nach Bedarf aktivierbar sind. In der Anzeigeeinheit 31 sind insbesondere die Eingaben, die über das an der Eingabevorrichtung 10 angeordnete Tastenfeld 20 eingegeben werden, dargestellt. Das Tastenfeld 20 ist vorzugsweise als eine Folientastatur ausgeführt, bei der das Tastenfeld von einer Folie überdeckt wird und die Folie in den Bereichen der einzelnen Tasten durchdrückbar ausgeführt ist, so dass ein Eindrücken der Folie im Bereich einer Taste zu einer Auslösung der entsprechenden Taste führt. Die erste Halterung 7 und die zweite Halterung 9 sind in der Weise ausgeführt, dass die Sonnenblende 5 gegen das Fahrzeugdach 18 klappbar ist, so dass die Windschutzscheibe 1 nicht mehr von der Sonnenblende 5 bedeckt ist. Vorzugsweise ist für die Sonnenblende 5 in dem Fahrzeugdach 18 eine Vertiefung zur Aufnahme der Sonnenblende 5 vorgesehen. Die Eingabevorrichtung 10 kann statt in der Sonnenblende 5 vor dem Beifahrer auch an der Sonnenblende 3 vor dem Fahrer oder an beiden Sonnenblenden 3, 5 angeordnet sein. Die Sonnenblenden 3, 5 sind vorzugsweise aus einem Kunststoffmaterial gefertigt. Das Bedienelement 12 zum Herauslösen der Sonnenblende ist vorzugsweise als ein versenkter Druckknopf ausgeführt, der sich nicht über das Fahrzeugdach 18 erhebt, um ein zufälliges Auslösen zu vermeiden.

Nach einem Herauslösen über eine Betätigung des Bedienelements 12 steht die Sonnenblende nicht mehr über die Halteelemente 6, 8, sondern über die drahtlose Datenübertragung zu dem Empfänger 13 in Verbindung, so daß die über die Eingabevorrichtung 10 und das Tastenfeld 20 eingegebenen Daten an die Recheneinheit 30 weitergegeben werden können. Hierbei kann ein Benutzer die Sonnenblende beliebig im Fahrzeug positionieren, so daß auch eine Benutzung nicht nur für den Fahrer bzw. den Beifahrer, sondern auch auf beliebigen, anderen Plätzen im Fahrzeug möglich ist. Zur Stromversorgung ist eine Batterie bzw. ein Akkumulator in der Sonnenblende 5 angeordnet.

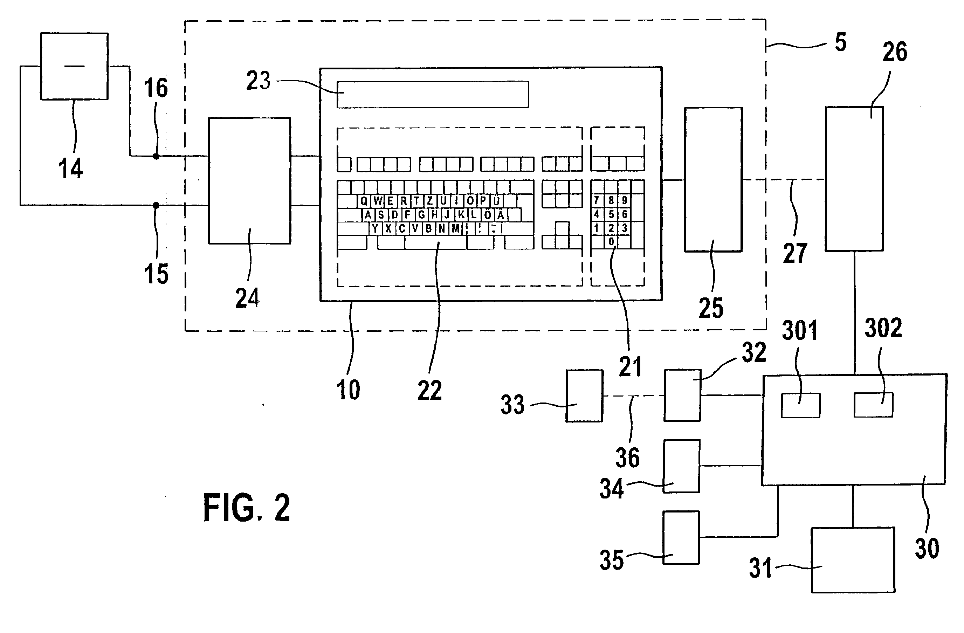

In der Figur 2 ist eine Schaltung der Eingabevorrichtung 10 und der zugehörigen Umgebung dargestellt. Hier und im Folgenden bezeichnen gleiche Bezugszeichen auch die gleichen Elemente. Die Eingabevorrichtung 10 ist in der Sonnenblende 5 angeordnet, die in der Figur 2 gestrichelt symbolisch dargestellt ist. Die Eingabevorrichtung weist ein erstes Tastenfeld 22 auf, das zumindest eine Buchstabenanordnung aufweist, wie sie an Schreibmaschinen und/oder bei Computertastaturen üblich ist. Die erste Zeile der Buchstaben beginnt links mit der Buchstabenfolge "QWERTZ" und kann alternativ, wie bei amerikanischen Tastaturen üblich, mit der Buchstabenfolge "QWERTY" beginnen. Das erste Tastenfeld 22 kann um Funktionstasten und/oder um Steuerungstasten erweitert sein. Ferner weißt die Eingabevorrichtung 10 ein zweites Tastenfeld 21 auf, das einen Ziffernblock mit den Ziffern von 0 bis 9 aufweist. Hierüber können insbesondere auf einfache Weise Zahlenfolgen, insbesondere Telefonnummern, eingegeben werden. Die Anordnung in dem ersten Tastenfeld kann dabei in der Weise erfolgen, dass die Ziffern von 1 bis 9 in einem 3 mal 3 Tasten umfassenden Feld angeordnet sind. In der Figur 2 ist eine Anordnung dargestellt, bei der die Ziffern 7, 8, 9 in der ersten, die Ziffern 4, 5, 6 in der zweiten und die Ziffern 1, 2, 3 in der dritten Reihe angeordnet sind und sich neben der Taste der "2" in einer vierten Zeile die Taste für die "0" befindet. Die Zeile mit den Tasten für die Ziffern 7, 8 und 9 kann mit der Zeile für die Ziffern 1, 2 und 3 vertauscht sein. Die Eingabevorrichtung kann auch in der Weise ausgeführt sein, dass entweder nur das erste Tastenfeld 22 oder das zweite Tastenfeld 21 an der Eingabevorrichtung angeordnet ist. Ebenfalls ist eine Anordnung eines beliebig gestalteten Tastenfeldes oder eine Ausführung als ein berührungsempfindlicher Bildschirm (Touch-Screen) möglich. Ferner weist die Eingabevorrichtung 10 eine Anzeigeeinheit 23 auf, die vorzugsweise als eine Flüssigkristallanzeige oder als eine Folienanzeige ausgeführt ist und die insbesondere dazu dient, einem Benutzer direkt seine Eingabe anzuzeigen, ohne dass er seinen Blick auf die Anzeigeeinheit 31 wenden muss. Die Eingabevorrichtung 10 ist in der Sonnenblende 5 mit einem Akkumulator 24 und eine erste Sender- und Empfängereinheit 25 verbunden. Der Akkumulator 24 versorgt sowohl die Eingabevorrichtung 10 als auch die erste Sender- und Empfängereinheit 25 mit Strom. Der Akkumulator 24 steht über Versorgungsleitungen mit der Fahrzeugbatterie 14, die vorzugsweise als ein Bleiakkumulator ausgeführt ist, über einen ersten Kontakt 15 und einem zweiten Kontakt 16 in Verbindung, solange sich die Sonnenblende 5 in der ersten Halterung 7 und der zweiten Halterung 9 befindet. Der erste Kontakt 15 und der zweite Kontakt 16 sind vorzugsweise in der ersten Halterung 7 und dem ersten Halteelement 6 angeordnet. Der Akkumulator 24 kann alternativ als eine nicht wieder aufladbare Batterie ausgeführt sein. In diesem Fall entfallen die elektrisch leitenden Verbindungen zu der Fahrzeugbatterie 14. Über eine drahtlose Verbindung 27, vorzugsweise eine Infrarot- oder Funkverbindung, steht die erste Sender- und Empfängereinheit 25 in einer zweiten Sender- und Empfängereinheit 26 in Verbindung. Die zweite Sender- und Empfängereinheit 26 ist wiederum mit der Recheneinheit 30 verbunden. Die Recheneinheit 30 weist zumindest einen Mikroprozessor 301 und einem Speicher 302 auf. Ferner steuert die Recheneinheit 30 die Ausgabe in der Anzeigeeinheit 31. In dem in der Figur 2 dargestellten Ausführungsbeispiel dient die Recheneinheit 30 als eine Verbindung zum Internet, als ein Bordcomputer und als eine Navigationsvorrichtung. Über eine Mobilfunkschnittstelle 32 ist die Recheneinheit 30 über eine Mobilfunkverbindung 36 mit einer Dienstezentrale 33 verbunden, der vorzugsweise ein Verbindungsrechner zum Internet ist. Über das Internet können Nachrichten in elektronischer Form (z.B. E-Mail) verschickt und empfangen werden und/oder Seiten des World-Wide-Web (WWW) abgerufen werden. Über eine GPS-Antenne 34 (GPS = Global Positioning System) kann die Position des Fahrzeugs bestimmt werden und an die Recheneinheit 30 weitergeleitet werden. Nachdem über die Eingabevorrichtung 10 und das erste Tastenfeld 22 sowie das zweite Tastenfeld 21 ein Fahrziel eingegeben und an die Recheneinheit 30 übermittelt worden ist, kann der Mikroprozessor 301 auf eine in dem Speicher 302 gespeicherte digitale Straßenkarte mit einem gespeicherten Straßen- und Wegenetz zugreifen und unter Ausnutzung der Kartendaten in Abhängigkeit von der bestimmten Position und dem eingegebenen Fahrziel eine Fahrtroute zwischen der Position des Fahrzeugs und dem Fahrziel bestimmen. Ferner kann die Recheneinheit 30 Fahrzeugsensoren 35 auswerten und somit eine Fahrzeugdiagnose durchführen, z. B. bezüglich des Benzinverbrauchs oder zur Erfassung von Schäden am Fahrzeug.

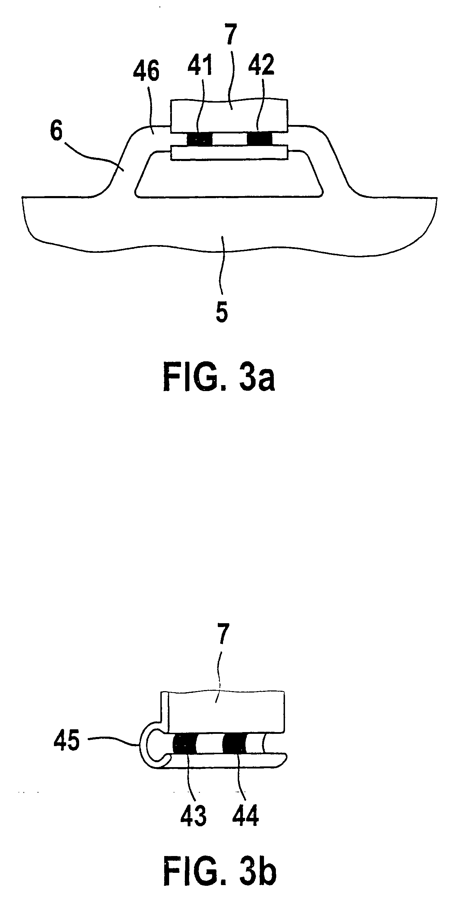

In die Figur 3 ist das erste Halteelement 6 in einer ersten Halterung 7 dargestellt. Das erste Halteelement 6 weist einen ersten Metallkontakt 41 und einen zweiten Metallkontakt 42 auf. Der erste Metallkontakt 41 und der zweite Metallkontakt 42 sind elektrisch getrennt. Der erste Metallkontakt 41 führt zu einem ersten Anschluf3 des Akkumulators 24 und der zweite Metallkontakt 42 führt zu einem zweiten Anschluß des Akkumulators 24. Das erste Halteelement 6 weist einen Steg 46 mit einem nahezu runden Querschnitt auf, der in die erste Halterung 7 einpassbar und darin drehbar ist, wenn die Sonnenblende 5 zwischen der Windschutzscheibe 1 und dem Fahrzeugdach 18 in ihrer Position verändert wird. Die zweite Halterung 9 und das zweite Halteelement 8, bilden vorzugsweise ein Kugelgelenk, das auch bei der Lösung der Sonnenblende 5 aus der ersten Halterung 7 eine Drehung der Sonnenblende 5 gegen eine in der Figur 1 nicht gezeigte Seitenscheibe des Fahrzeugs erlaubt. Mit dem Bedienelement 12 kann dabei vorzugsweise nur die zweite Halterung 9 gelöst werden. Die erste Halterung 7 ist manuell zu lösen, so dass ein versehentliches Herausfallen der Sonnenblende 5 vermieden wird.

In der Figur 3b ist die erste Halterung 7 ohne das erste Halteelement 6 dargestellt. Ein Rundbereich 45, der sonst das erste Halteelement 6 hält, weist einen dritten Metallkontakt 43 und einen vierten Metallkontakt 44 auf. Der Rundbereich 45 ist aus einem zumindest teilweise elastischen Material gefertigt, z.B. einem Kunststoff, so dass das erste Halteelement 6 in den Rundbereich 45 einsetzbar und einrastbar ist. Unabhängig von der Stellung des Steges 46 im Rundbereich 45, also unabhängig davon, ob die Sonnenblende gegen die Windschutzscheibe 1 geklappt ist, gegen das Fahrzeugdach 18 geklappt ist oder sich in einer Zwischenstellung befindet, besteht ein elektrischer Kontakt zwischen dem ersten Metallkontakt 41 und dem dritten Metallkontakt 43 sowie elektrisch getrennt davon ein elektrischer Kontakt zwischen dem zweiten Metallkontakt 42 und dem vierten Metallkontakt 44. Der dritte Metallkontakt 43 ist mit einem ersten Pol der Fahrzeugbatterie 14 und der vierte Metallkontakt 44 ist mit einem zweiten Pol der Fahrzeugbatterie 14 verbunden. Der erste Metallkontakt 41 und der dritte Metallkontakt 43 bilden den ersten Kontakt 15, der zweite Metallkontakt 42 und der vierte Metallkontakt 44 den zweiten Kontakt 16.

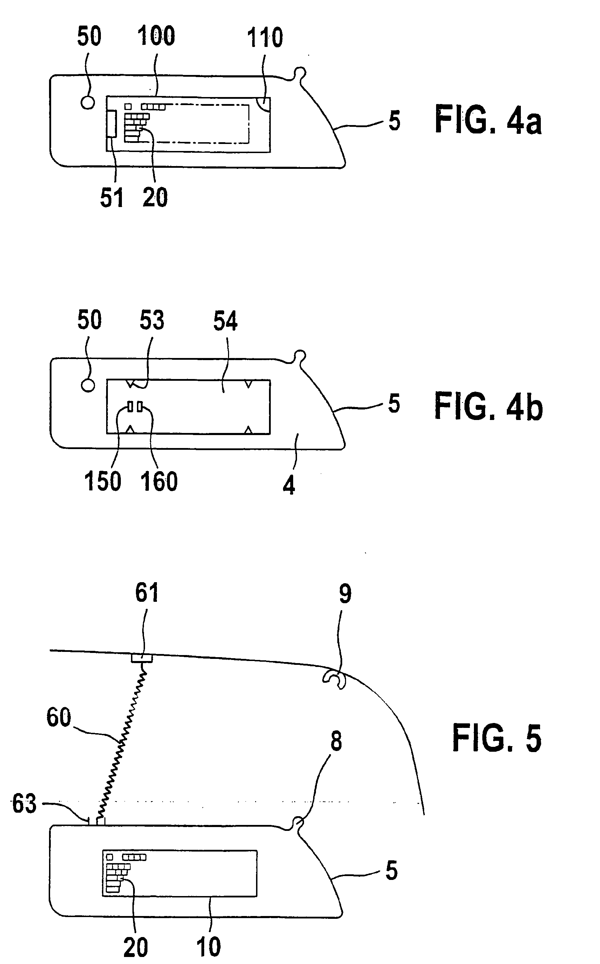

In der Figur 4a ist eine Eingabevorrichtung 100 in der Sonnenblende 5 angeordnet dargestellt, die durch den Druck auf ein Bedienelement 50, vorzugsweise einen Druckknopf, aus der Sonnenblende 5 herauslösbar ist. Die Eingabevorrichtung 100 weist eine Anfasse 51 auf, die ein Benutzer ergreifen kann, um die Eingabevorrichtung aus der Sonnenblende bequem herauslösen zu können. Aus Gründen der Übersichtlichkeit der Zeichnung ist in die Figur 4a ein Tastenfeld 20 an der Eingabevorrichtung 100 lediglich angedeutet. Es kann als ein zweites Tastenfeld 21, ein erstes Tastenfeld 22, als eine Kombination des ersten und des zweiten Tastenfeldes 21, 22 oder als ein andersartig gestaltetes Tastenfeld ausgeführt sein. Ein Akkumulator 24 und eine erste Sender- und Empfängereinheit sind nunmehr in der Eingabevorrichtung 100 direkt angeordnet, in der Figur 4a jedoch nicht dargestellt. Ein Bereich 110, durch den eine Datenübertragung zu einer zweiten Sender- und Empfängereinheit 26 erfolgt, ist nun in der Eingabevorrichtung 100 direkt angeordnet.

In der Figur 4b ist die Eingabevorrichtung 100 aus der Sonnenblende 5 herausgelöst dargestellt. In der von der Windschutzscheibe 1 abweisenden Seite 4 der Sonnenblende 5 ist nun eine Vertiefung 54 ersichtlich, in der Darstellung gemäß der Figur 4a die Eingabevorrichtung 100 angeordnet war. In der Vertiefung 54 sind Rasthaken 53 erkennbar, die die Eingabevorrichtung 100 halten können und die durch ein Betätigen des Bedienelements 50 lösbar sind. Ferner befindet sich in der Vertiefung 54 ein erster Anschluß 150 und ein zweiter Anschluß 160, über die ein Kontakt zwischen dem in der Eingabevorrichtung 100 angeordneten Akkumulator 24 zu der Fahrzeugbatterie 14 herstellbar ist.

In der Figur 5 ist ein Ausführungsbeispiel der Eingabevorrichtung 10 dargestellt, bei der die Sonnenblende 5 und damit die Eingabevorrichtung 10 direkt über ein Kabel 60 mit der Fahrzeugbatterie 14 und der Recheneinheit 30 verbunden ist. Eine erste Halterung 61 ist dabei in der Weise ausgeführt, dass das Kabel 60, das entweder glatt oder helixförmig ausgebildet ist, bei einem Einsetzen der Sonnenblende 5 in die erste Halterung 61 und in die zweite Halterung 9 automatisch in einer in dem Fahrzeugdach 18 angeordnete, in der Figur nicht gezeigte Kabelaufrollvorrichtung aufgerollt wird. Das erste Halteelement 63 rastet dann in die erste Halterung 61 ein. Einer in der Sonnenblende 5 oder der Eingabevorrichtung 10 angeordneter Akkumulator kann entfallen, da ständig eine Spannungsversorgung über das Kabel 60 gewährleistet ist. Dennoch kann die Sonnenblende vollständig aus der ersten Halterung 61 und der zweiten Halterung 9 entnommen werden, so daß die an der Sonnenblende 5 angeordnete Eingabevorrichtung bequem als Tastatur verwendet werden kann, indem ein Benutzer sie in eine geeignete Lage, z.B. auf einer dafür vorgesehenen Vertiefung in der Instrumententafel oder auf den Beinen des Benutzers, bringt.

Die Sonnenblende bleibt jedoch über das Kabel 60 mit der Recheneinheit 30 bzw. der Fahrzeugbatterie 14 verbunden. Durch das Kabel 60 verläuft ein Vielzahl von Leitungen zur Spannungsversorgung und zur Datenübertragung. In einem weiteren Ausführungsbeispiel umfaßt das Kabel 60 genau zwei Leitungen, bei der ein Datenübertragungssignal auf die Spannungsversorgung aufmoduliert wird.

## Patentansprüche

1. Eingabevorrichtung in einem Fahrzeug mit einer Vielzahl von Tasten, wobei die Eingabevorrichtung mit einer Recheneinheit verbunden ist, wobei in dem Fahrzeug eine Sonnenblende angeordnet ist, wobei die Eingabevorrichtung (10, 100) an der Sonnenblende (3, 5) in dem Fahrzeug angeordnet ist, wobei die Sonnenblende (3, 5) in einer Halterung (7, 9, 61) angeordnet ist, **dadurch gekennzeichnet, dass** die Sonnenblende (3, 5) für eine Eingabe mit der Eingabevorrichtung (10, 100) aus der Halterung (7, 9, 61) entnehmbar ist und dass die Eingabevorrichtung (10) in die Sonnenblende (3, 5) eingebaut ist.

2. Eingabevorrichtung nach Anspruch 1, **dadurch gekennzeichnet, dass** die Eingabevorrichtung (10,100) über eine von einem Bordnetz des Fahrzeugs unabhängige Spannungsversorgung (24) verfügt.

3. Eingabevorrichtung nach einem der vorhergehenden Ansprüche, **dadurch gekennzeichnet, dass** die Eingabevorrichtung mit einem Akkumulator (24) verbunden ist und dass der Akkumulator (24) durch einen Ladestrom aufladbar ist, wenn die Sonnenblende (3, 5) in der Halterung (7, 9) gehaltert ist und in elektrischem Kontakt (15, 16) zu der Eingabevorrichtung (10, 100) steht.

4. Eingabevorrichtung nach einem der vorhergehenden Ansprüche, **dadurch gekennzeichnet, dass** die Eingabevorrichtung (10, 100) mit einer ersten Sender- und Empfängereinheit (25) verbunden ist, dass die Recheneinheit (30) mit einer zweiten Sender- und Empfängereinheit (26) verbunden ist und dass Daten zwischen der Eingabevorrichtung (10, 100) und der Recheneinheit (30) über die erste und die zweite Sender- und Empfängereinheit (25, 26) drahtlos, vorzugsweise über eine Funk- oder über eine Infrarotübertragung, übertragbar sind.

5. Eingabevorrichtung nach einem der Ansprüche 1-2, **dadurch gekennzeichnet, dass** die Eingabevorrichtung (10) über Verbindungsleitungen (60) mit der Recheneinheit (30) verbunden ist.

6. Eingabevorrichtung nach einem der vorhergehenden Ansprüche, **dadurch gekennzeichnet, dass** an der Eingabevorrichtung (10, 100) zumindest Tasten für die Buchstaben des Alphabets (22) oder Tasten für die ganzen Zahlen von null bis neun (21) angeordnet sind.

7. Eingabevorrichtung nach einem der vorhergehenden Ansprüche, **dadurch gekennzeichnet, dass** die Tasten (20, 21, 22) der Eingabevorrichtung (10, 100) als Folientasten ausgeführt ist.

8. Eingabevorrichtung nach einem der vorhergehenden Ansprüche, **dadurch gekennzeichnet, dass** an der Eingabevorrichtung (10, 100) und/oder an der Sonnenblende (3, 5) eine Anzeigeeinheit (23) angeordnet ist

9. Eingabevorrichtung nach einem der vorhergehenden Ansprüche, **dadurch gekennzeichnet, dass** mit der Eingabevorrichtung (10, 100) Daten in eine Fahrerinformationsvorrichtung und/oder in eine Navigationsvorrichtung und/oder über eine drahtlose Schnittstelle (32) in eine außerhalb des Fahrzeugs angeordnete Dienstezentrale (33) eingebbar sind.

10. Eingabevorrichtung nach einem der vorhergehenden Ansprüche, **dadurch gekennzeichnet, dass** die Eingabevorrichtung (10, 100) durch die Sonnenblende (3, 5) verdeckbar ist, insbesondere durch ein Klappen der Sonnenblende (3, 5) gegen ein Fahrzeugdach (18).

11. Sonnenblende zur Aufnahme einer Eingabevorrichtung nach einem der vorhergehenden Ansprüche.

## Claims

1. Input apparatus in a vehicle having a multiple number of keys, the input apparatus being connected to a computer unit, a sun visor being arranged in the vehicle, the input apparatus (10, 100) being arranged at the sun visor (3, 5) in the vehicle, the sun visor (3, 5) being arranged in a mount (7, 9, 61), **characterized in that** the sun visor (3, 5) can be removed from the mount (7, 9, 61) in order to make an input using the input apparatus (10, 100), and **in that** the input apparatus (10) is incorporated in the sun visor (3, 5).

2. Input apparatus according to Claim 1, **characterized in that** the input apparatus (10, 100) has a power supply (24) which is independent from an on-board electrical system of the vehicle.

3. Input apparatus according to either of the preceding claims, **characterized in that** the input apparatus is connected to a storage battery (24), and **in that** the storage battery (24) can be charged by a charging current when the sun visor (3, 5) is held in the mount (7, 9) and is in electrical contact (15, 16) with the input apparatus (10, 100).

4. Input apparatus according to one of the preceding claims, **characterized in that** the input apparatus (10, 100) is connected to a first transceiver unit (25), **in that** the computer unit (30) is connected to a second transceiver unit (26), and **in that** data can be transmitted between the input apparatus (10, 100) and the computer unit (30) via the first and the second transceiver unit (25, 26) in a wire-free fashion, preferably by means of radio transmission or by means of infrared transmission.

5. Input apparatus according to either of Claims 1 and 2, **characterized in that** the input apparatus (10) is connected to the computer unit (30) via connection lines (60).

6. Input apparatus according to one of the preceding claims, **characterized in that** at least keys for the letters of the alphabet (22) or keys for the integers from zero to nine (21) are arranged on the input apparatus (10, 100).

7. Input apparatus according to one of the preceding claims, **characterized in that** the keys (20, 21, 22) of the input apparatus (10, 100) are in the form of membrane keys.

8. Input apparatus according to one of the preceding claims, **characterized in that** a display unit (23) is arranged on the input apparatus (10, 100) and/or on the sun visor (3, 5).

9. Input apparatus according to one of the preceding claims, **characterized in that** the input apparatus (10, 100) can be used to input data into a driver information apparatus and/or into a navigation apparatus and/or into a service centre (33), which is arranged outside the vehicle, via a wire-free interface (32).

10. Input apparatus according to one of the preceding claims, **characterized in that** the input apparatus (10, 100) can be concealed by the sun visor (3, 5), in particular by folding the sun visor (3, 5) against the vehicle roof (18).

11. Sun visor for holding an input apparatus according to one of the preceding claims.

## Revendications

1. Dispositif d'entrée de données dans un véhicule, comportant de nombreuses touches, le dispositif d'entrée de données étant relié à une unité de calcul et le véhicule est équipé d'un pare-soleil,
le dispositif d'entrée (10, 100) est prévu sur le pare-soleil (3, 5) du véhicule,
le pare-soleil (3, 5) est installé dans un support (7, 9, 61),
**caractérisé en ce que**
le pare-soleil (3, 5) peut être enlevé du support (7, 9, 61) pour faire une entrée à l'aide du dispositif d'entrée de données (10, 100) et le dispositif d'entrée (10) est intégré dans le pare-soleil (3, 5).

2. Dispositif d'entrée de données selon la revendication 1,
**caractérisé en ce que**
le dispositif d'entrée de données (10, 100) dispose d'une alimentation en tension (24) indépendante du réseau électrique embarqué dans le véhicule.

3. Dispositif d'entrée de données selon l'une des revendications précédentes,
**caractérisé en ce que**
le dispositif d'entrée est relié à l'accumulateur (24) et l'accumulateur (24) se charge par un courant de charge si le pare-soleil (3, 5) est fixé dans le support (7, 9) et est en contact électrique (15, 16) avec le dispositif d'entrée de données (10, 100).

4. Dispositif d'entrée de données selon l'une des revendications précédentes,
**caractérisé en ce que**
le dispositif d'entrée (10, 100) est relié à une première unité d'émetteur et de récepteur (25), l'unité de calcul (30) étant reliée à une seconde unité d'émetteur et de récepteur (26) et
les données sont échangées entre le dispositif d'entrée (10, 100) et l'unité de calcul (30) par la première et la seconde unité d'émission et de réception (25, 26) par une liaison sans fil, de préférence par une liaison radio ou une liaison infrarouge.

5. Dispositif d'entrée de données selon l'une des revendications 1 et 2,
**caractérisé en ce que**
le dispositif d'entrée de données (10) est relié par des lignes de liaison (60) à l'unité de calcul (30).

6. Dispositif d'entrée de données selon l'une des revendications précédentes,
**caractérisé en ce que**
le dispositif d'entrée de données (10, 100) comporte au moins des touches pour les lettres de l'alphabet (22) ou des touches pour des nombres entiers compris entre zéro et neuf (21).

7. Dispositif d'entrée de données selon l'une des revendications précédentes,
**caractérisé en ce que**
les touches (20, 21, 22) du dispositif d'entrée (10, 100) sont des touches en forme de films.

8. Dispositif d'entrée de données selon l'une quelconque des revendications précédentes,
**caractérisé en ce que**
le dispositif d'entrée (10, 100) et/ou le pare-soleil (3, 5) comportent une unité d'affichage (23).

9. Dispositif d'entrée de données selon l'une des revendications précédentes,
**caractérisé en ce que**
le dispositif d'entrée de données (10, 100) permet d'introduire des données dans un dispositif d'informations du conducteur et/ou dans un dispositif de navigation et/ou par une interface sans fil (32) dans une centrale de service installée à l'extérieur du véhicule.

10. Dispositif d'entrée de données selon l'une des revendications précédentes,
**caractérisé en ce que**
le dispositif d'entrée de données (10, 100) est couvert par le pare-soleil (3, 5), notamment par basculement du pare-soleil (3, 5) en direction du pavillon (18) du véhicule.

11. Pare-soleil pour recevoir un dispositif d'entrée de données selon l'une des revendications précédentes.
